(19) **Europäisches Patentamt / European Patent Office / Office européen des brevets**

(11) **EP 1 323 879 B1**

(12) # EUROPÄISCHE PATENTSCHRIFT

(45) Veröffentlichungstag und Bekanntmachung des Hinweises auf die Patenterteilung:
**19.12.2007 Patentblatt 2007/51**

(51) Int Cl.:
*E04F 15/00* (2006.01)    *C09J 133/08* (2006.01)

(21) Anmeldenummer: **02028833.8**

(22) Anmeldetag: **23.12.2002**

(54) **Bodenbelagsklebstoffe auf Basis von Emulsionspolymerisaten**

Carpet adhesives based on emulsion polymer

Adhésif moquette à base de polymères en émulsion

(84) Benannte Vertragsstaaten:
**AT BE BG CH CY CZ DE DK EE ES FI FR GB GR IE IT LI LU MC NL PT SE SI SK TR**

(30) Priorität: **27.12.2001 DE 10164182**

(43) Veröffentlichungstag der Anmeldung:
**02.07.2003 Patentblatt 2003/27**

(73) Patentinhaber: **BASF Aktiengesellschaft**
**67056 Ludwigshafen (DE)**

(72) Erfinder:
- **Feldthusen Jensen, Jesper**
  **55129 Mainz (DE)**
- **Pakusch, Joachim**
  **67346 Speyer (DE)**

- **Wildburg, Gerald**
  **67346 Speyer (DE)**
- **Seibert, Horst**
  **67136 Fussgönheim (DE)**
- **Anselmann, Thomas**
  **76829 Landau (DE)**

(74) Vertreter: **Pohl, Michael Friedrich et al**
**Reitstötter, Kinzebach & Partner (GbR)**
**Patentanwälte**
**Ludwigsplatz 4**
**67059 Ludwigshafen (DE)**

(56) Entgegenhaltungen:
**EP-A- 0 900 651**        **JP-A- 2001 115 113**

## Beschreibung

Die vorliegende Erfindung betrifft Bodenbelagsklebstoffe auf Basis von Emulsionspolymerisaten.

Unter Bodenbelagsklebstoffen versteht man Verlegewerkstoffe für das Verlegen und Verkleben flexibler Bodenbeläge, wie PVC, Linoleum, Gummi, Polyolefine und textile Bodenbeläge (siehe D. Urban et al. in "Wäßrige Polymerdispersionen" (Herausgeber D. Distler), Wiley-VCH, Weinheim 1999, S. 150-154). Moderne Bodenbelagsklebstoffe basieren auf Emulsionspolymerisaten, die als Bindemittel für die Klebwirkung maßgeblich verantwortlich sind und deren Verwendung eine lösungsmittelfreie und damit emissionsarme Formulierung des Bodenbelagsklebstoffes ermöglicht.

Grundsätzliche Anforderungen an Klebstoffe und auch an Bodenbelagsklebstoffe sind eine gute Adhäsion des Klebstoffs zum Substrat und eine gute Kohäsion, d.h. ein guter Zusammenhalt in der Klebstoffschicht. Die gleichzeitige Optimierung dieser Eigenschaften ist problematisch, da in der Regel eine Verbesserung der adhäsiven Eigenschaften mit einer Verringerung der kohäsiven Eigenschaften eines Klebstoffs einhergeht und umgekehrt.

Darüber hinaus müssen Bodenbelagsklebstoffe ein gutes Naßanzugsvermögen aufweisen. Ein gutes Naßanzugsvermögen bedeutet, daß nach Verlegen des Bodenbelages auf den mit dem Bodenbelagskleber beschichteten Untergrund der Bodenbelag zunächst noch ausgerichtet und seine Lage korrigiert werden kann. Dann aber sollte rasch eine rutschfeste Verbindung gegeben sein, deren Festigkeit mit fortlaufender Trocknung zunimmt. Weiterhin sollen Bodenbelagskleber ein gutes Trockenanfassvermögen aufweisen, was bedeutet, daß auch nach längerer Ablüftzeit der Bodenbelag nach Verlegen auf den dann trockenen Untergrund einen festen, rutschfesten Verbund ergibt. Derartige Eigenschaften sind insbesondere bei der Verklebung von flexiblen Bodenbelägen wichtig.

Weiterhin ist erwünscht, daß der Klebstoff weitgehend lösungsmittelfrei ist, damit er weder bei der Verarbeitung noch im späteren verlegten Zustand Substanzen emittiert, welche die Raumluft belasten.

Bodenbelagsklebstoffe auf Basis von Emulsionspolymerisaten, insbesondere auf Basis von Acrylatlatices sind z.B. aus EP-A 490191, EP 962510 und WO 99/37716 bekannt. Das Anwendungsprofil dieser Bodenbelagsklebstoffe läßt jedoch in einigen Punkten zu wünschen übrig. Insbesondere ihr Trockenanfassvermögen ist nicht zufriedenstellend.

Der vorliegenden Erfindung liegt somit die Aufgabe zugrunde, Bodenbelagsklebstoffe mit ausgewogenen kohäsiven und adhäsiven Eigenschaften bereitzustellen. Mit anderen Worten, die Bodenbelagsklebstoffe sollen ein besseres Trockenanfassvermögen als vergleichbare Bodenbelagsklebstoffe des Standes der Technik aufweisen. Gleichzeitig sollten diese Bodenbelagsklebstoffe zu Verklebungen mit einer hohen Schälfestigkeit führen. Außerdem sollte das Naßanzugsvermögen nicht beeinträchtigt sein.

Es wurde überraschenderweise gefunden, daß Bodenbelagsklebstoffe auf Basis von Emulsionspolymerisaten, die überwiegend Alkylacrylate einpolymerisiert enthalten, besonders dann ein günstiges Anwendungsprofil aufweisen, wenn sie neben den Alkylacrylaten die nachstehend angegebenen Monomere b) bis d) einpolymerisiert enthalten.

Die vorliegende Erfindung betrifft daher Bodenbelagsklebstoffe, auf Basis eines Emulsionspolymerisates P, das

a) 65 bis 95 Gew.-% wenigstens eines Monomers a), ausgewählt unter $C_2$-$C_8$-Alkylacrylaten,

b) 2 bis 15 Gew.-% wenigstens eines Monomers b), ausgewählt unter $C_2$-$C_6$-Alkylmethacrylaten,

c) 0,5 bis 5 Gew.-% wenigstens eines monoethylenisch ungesättigten Monomers c), das wenigstens eine Säuregruppe aufweist,

d) 1 bis 19,5 Gew.-% wenigstens eines monoethylenisch ungesättigten neutralen Monomers d) mit einer Wasserlöslichkeit $\geq$ 50 g/l (bei 25°C) und gegebenenfalls

e) bis zu 20 Gew.-% von den Monomeren a), b), c) und d) verschiedene Monomere e)

einpolymerisiert enthält, wobei sich die Gewichtsanteile der Monomere a), b), c), d) und gegebenenfalls e) auf 100 Gew.-% addieren.

Die angegebenen Gewichtsteile der Monomere a) bis e) beziehen sich auf die zur Herstellung des Emulsionspolymerisates P eingesetzten Monomere und addieren sich auf 100 Gew.-%. Die angegebenen Gewichtsteile gelten sowohl für einphasige Emulsionspolymerisate, deren Polymerisatteilchen aus einer Polymerphase bestehen, als auch für Emulsionspolymerisate, deren Polymerisatteilchen zwei oder mehrere Polymerphasen aufweisen.

Der Gewichtsanteil der Monomere a) im Emulsionspolymerisat P beträgt vorzugsweise 75 bis 91 Gew.-%. Beispiele für Monomere a) sind Ethylacrylat, n-Propylacrylat, Isopropylacrylat, n-Butylacrylat, 2-Butylacrylat (= 2-Acryloxybutan), Isobutylacrylat, n-Hexylacrylat und 2-Ethylhexylacrylat. Vorzugsweise sind die Monomere a) ausgewählt unter n-Butylacrylat und Mischungen des n-Butylacrylats mit 2-Ethylhexylacrylat.

Der Gewichtsanteil der Monomere b) im Emulsionspolymerisat P beträgt vorzugsweise 3 bis 10 Gew.-%. Beispiele für Monomere b) sind Ethylmethacrylat, n-Butylmethacrylat, sec.-Butylmethacrylat (= 2-Methacryloxybutan) und tert.-Butylmethacrylat. Bevorzugtes Monomer b) ist n-Butylmethacrylat.

Der Gewichtsanteil der Monomere c) im Emulsionspolymerisat P liegt in der Regel im Bereich von 0,5 bis 5 Gew.-% und vorzugsweise im Bereich von 1 bis 5 Gew.-%, z.B. bei etwa 2,5 ± 0,5 Gew.-%. Typische Monomere c) sind $\alpha,\beta$-ethylenisch ungesättigte Monocarbonsäuren mit 3 bis 6 C-Atomen wie Acrylsäure und Methacrylsäure, $\alpha,\beta$-ethylenisch ungesättigte Dicarbonsäuren, z.B. Itaconsäure, ethylenisch ungesättigte Sulfonsäuren wie Vinylsulfonsäure, Acryloxyethylsulfonsäure, 2-Acrylamido-2-methylpropylsulfonsäure und Styrolsulfonsäure, monoethylenisch ungesättigte Phosphonsäuren, wobei $\alpha,\beta$-ethylenisch ungesättigte Mono- und Dicarbonsäuren bevorzugt sind.

Der Gewichtsanteil der Monomere d) liegt beispielsweise im Bereich von 1 bis 19,5 Gew.-% und vorzugsweise im Bereich von 5 bis 15 Gew.-%. Als Monomere d) sind grundsätzlich alle neutralen, hinreichend wasserlöslichen, monoethylenisch ungesättigten Monomere geeignet, die sich unter den Bedingungen einer Emulsionspolymerisation polymerisieren lassen. Hierzu zählen insbesondere monoethylenisch ungesättigte Nitrile wie Acrylnitril, Hydroxy-$C_2$-$C_4$-alkylester der vorgenannten $\alpha,\beta$-ethylenisch ungesättigten Carbonsäuren, z.B. die Hydroxyethyl- und die Hydroxypro-pylester wie Hydroxyethylacrylat, Hydroxypropylacrylat, Hydroxy-ethylmethacrylat und Hydroxypropylmethacrylat. Weitere Beispiele für Monomere d) sind die Amide monoethylenisch ungesättigter Carbonsäuren wie Acrylamid und Methacrylamid. Besonders bevorzugtes Monomer d) ist Acrylnitril.

Als Monomere e) kommen grundsätzlich alle ein- oder mehrfach ethylenisch ungesättigten Monomere in Betracht, die unter den Bedingungen einer radikalischen Emulsionspolymerisation mit den vorgenannten Monomeren a) bis d) copolymerisierbar sind. Der Anteil an zwei- oder mehrfach ethylenisch ungesättigten Monomeren wird jedoch in der Regel nicht mehr als 0,5 Gew.-% und insbesondere nicht mehr als 0,3 Gew.-%, bezogen auf die Gesamtmenge der Monomere a) bis e) betragen. Beispiele für Monomere e) sind monoethylenisch ungesättigte, hydrophobe Monomere e1) (Wasserlöslichkeit < 50 g/l bei 25°C) wie Methylmethacrylat, Vinylaromaten wie Styrol, Vinyltoluol, $\alpha$- und von p-Methylstyrol, Vinylester aliphatischer $C_1$-$C_{10}$-Carbonsäuren wie Vinylacetat und Vinylpropionat. Beispiele für zwei- oder mehrfach ethylenisch ungesättigte Monomere, im Folgenden Monomere e2), sind die Di- und Triacrylate bzw. -methacrylate von di- und von trifunktionellen Alkoholen, z.B. Ethylenglykoldiacrylat, Diethylenglykoldiacrylat, Triethylenglykoldiacrylat, Butandioldiacrylat, Hexandioldiacrylat, Trimethylolpropantriacrylat, Tripropylenglykoldiacrylat, weiterhin Divinylbenzol und Diallylphthalat.

In einer speziellen Ausführungsform der Erfindung enthält das Emulsionspolymerisat 0,01 bis 0,3 Gew.-% und insbesondere 0,05 bis 0,2 Gew.-% wenigstens eines Monomers e2), vorzugsweise eines zweifach ethylenisch ungesättigten Monomers und insbesondere ein Diacrylat eines Diols einpolymerisiert.

In der Regel weist das Emulsionspolymerisat P eine Glasübergangstemperatur unterhalb 0°C, vorzugsweise im Bereich von -60 bis -10°C, insbesondere im Bereich von -40 bis -15°C und besonders bevorzugt im Bereich von -30 bis -15°C auf. Die Glasübergangstemperatur läßt sich dabei nach üblichen Methoden wie Differentialthermoanalyse oder Differential Scanning Calorimetry (s. z.B. ASTM-D 3418/82, sogenannte "Midpoint-Temperature") bestimmen. Hierbei erweist es sich als hilfreich, die Glasübergangstemperatur Tg des Emulsionspolymerisats P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von Mischpolymerisaten bei großen Molmassen in guter Näherung

$$\frac{1}{T_g} = \frac{X^1}{T_g^1} + \frac{X^2}{T_g^2} + \cdots \cdot \frac{X^n}{T_g^n}$$

wobei $X^1$, $X^2$, ..., $X^n$ für die Massenbrüche der Monomere 1, 2, ..., n stehen und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Hinsichtlich der Wärmestandfestigkeit der erfindungsgemäßen Bodenbelagsklebstoffe hat es sich als vorteilhaft erwiesen, wenn man Emulsionspolymerisate P verwendet, die durch Polymerisation der Monomere a) bis e) in Gegenwart wenigstens eines Molekulargewichtsreglers erhältlich sind. Die Menge an Molekulargewichtsregler beträgt dabei in der Regel 0,01 bis 1 Gew.-%, vorzugsweise 0,01 bis 0,5 Gew.-%, insbesondere 0,05 bis 0,3 Gew.-%, bezogen auf die Gesamtmenge der zu polymerisierenden Monomere a) bis e). Typische Molekulargewichtsregler sind organische Schwefelverbindungen, halogenierte Kohlenwasserstoffe, Silane, Allylalkohole sowie Aldehyde. Erfindungsgemäß bevorzugte Molekulargewichtsregler sind Verbindungen mit wenigstens einer Thiolgruppe wie Thioglykolsäure, Thioglykolsäurealkylester, Mercaptoethanol, Mercaptopropyltrimethoxysilan sowie insbesondere lineare oder verzweigte Alkylmercaptane mit vorzugsweise 4 bis 20 C-Atomen wie tert.-Butylmercaptan, n-Dodecylmercaptan, tert.-Dodecylmercaptan und dergleichen.

Die Herstellung der in den erfindungsgemäßen Bodenbelagsklebstoffen verwendeten Emulsionspolymerisate erfolgt in an sich bekannter Weise durch radikalische, wäßrige Emulsionspolymerisation der Monomere a) bis e) in den oben angegebenen Mengen. In der Regel erfolgt die Emulsionspolymerisation in einem wäßrigen Polymerisationsmedium in Gegenwart wenigstens eines, die radikalische Polymerisation der Monomere a) bis e) auslösenden Initiators und gegebenenfalls in Gegenwart einer grenzflächenaktiven Substanz sowie gegebenenfalls in Gegenwart eines Molekulargewichtsreglers wie oben erläutert.

Die Emulsionspolymerisation kann einstufig oder mehrstufig oder nach einer sogenannten Quellungsfahrweise, wie sie in der WO 98/10001 beschrieben ist, erfolgen.

In einer bevorzugten Ausführungsform der vorliegenden Erfindung erfolgt die Herstellung nach einem einstufigen Polymerisationsverfahren, d.h. das Emulsionspolymerisat ist erhältlich durch Polymerisation einer Monomerzusammensetzung, welche die Monomere a) bis e) in den gewünschten Mengen enthält. In dieser Ausführungsform kann die Emulsionspolymerisation sowohl als Batchprozeß als auch als Zulaufverfahren, einschließlich Stufen- oder Gradientenfahrweise, ausgestaltet sein. Hierunter bevorzugt ist das Zulaufverfahren, bei dem man die Hauptmenge der Monomere a) bis e), vorzugsweise wenigstens 80 % und insbesondere wenigstens 90 % der Monomere dem Polymerisationsgefäß unter Polymerisationsbedingungen kontinuierlich, stufenweise oder unter Überlagerung eines Konzentrationsgefälles zuführt. Die Zugabe der Monomere kann in reiner oder vorzugsweise in Form einer wäßrigen Emulsion der Monomere erfolgen.

Der Initiator kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise zugesetzt werden. Im Einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs dem Polymerisationsgefäß zugeführt.

In einer anderen bevorzugten Ausführungsform der vorliegenden Erfindung werden die Polymerisate nach der in der WO 98/10001 beschriebenen Quellungsfahrweise hergestellt. Hierzu geht man wie folgt vor:

i) Eine Monomerzusammensetzung M1 wird polymerisiert, welche Monomere a), c), d) und gegebenenfalls e) enthält und die wenigstens 85 Gew.-%, z.B. 85 bis 99,5 Gew.-%, vorzugsweise 90 bis 99 Gew.-% der Gesamtmonomermenge ausmacht, wobei man eine wäßrige Dispersion eines ersten Emulsionspolymerisates P1 erhält;

ii) zu der wäßrigen Dispersion des Emulsionspolymerisates P1 gibt man eine zweite Monomerzusammensetzung M2, welche eine Teilmenge oder die Gesamtmenge des Monomers b) und gegebenenfalls die Restmengen der Monomere a), c), d) und gegebenenfalls e) enthält, wobei die Zugabe in einer Weise erfolgt, die eine Quellung des Polymer P1 durch die Monomerzusammensetzung M2 bewirkt, und

iii)die in ii) erhaltene Dispersion des gequollenen Polymeren P1 wird polymerisiert, wobei man das Emulsionspolymerisat P erhält.

Schritt i) erfolgt nach den üblichen Methoden einer wäßrigen Emulsionspolymerisation, vorzugsweise nach einem Monomerzulaufverfahren wie oben erläutert. Die in Schritt i) zu polymerisierende Monomerzusammensetzung M1 enthält vorzugsweise wenigstens 95 % der Monomere a) und wenigstens 95 % der Monomere d) sowie gegebenenfalls wenigstens 95 % der Monomere e), sofern es sich bei diesen nicht um ein Monomer e2) handelt. Vorzugsweise enthält sie nicht mehr als 70 % der Monomere b) und wenigstens 95 % der Monomere c).

Zu der in Schritt i) erhaltenen wäßrigen Dispersion des Emulsionspolymerisates P1 gibt man dann eine zweite Monomerzusammensetzung M2, welche vorzugsweise wenigstens 30 % des Monomeren b) enthält. Daneben enthält die Monomerzusammensetzung M2 die Restmengen an Monomeren a), c), d) und gegebenenfalls e). Sofern das Emulsionspolymerisat P ein Monomer e2) einpolymerisiert enthalten soll, wird dieses vorzugsweise in der Monomerzusammensetzung M2 eingesetzt.

In einer bevorzugten Ausführungsform der Erfindung enthält die Monomerzusammensetzung M1 nicht mehr als 20 % der Monomere b) und insbesondere keine Monomere b). Dementsprechend enthält dann die Monomerzusammensetzung M2 wenigstens 80 % und insbesondere die Gesamtmenge der Monomere b). In einer anderen Ausführungsform enthält die Monomerzusammensetzung M1 20 bis 70 % der Monomere b) und die Monomerzusammensetzung M2 dementsprechend 30 bis 80 % der Monomere b).

Im übrigen wird man die Monomerzusammensetzung M2 so wählen, daß die für diese Monomerzusammensetzung nach Fox berechnete theoretische Glasübergangstemperatur $T_g^2$ wenigstens 30 Kelvin und vorzugsweise wenigstens 50 Kelvin oberhalb der für die Monomerzusammensetzung M1 berechneten theoretischen Glasübergangstemperatur $T_g^1$ liegt.

Die Zugabe der Monomerzusammensetzung M2 erfolgt dabei in einer Weise, daß eine Quellung des in Stufe i) hergestellten Polymerisates P1 durch die Monomere der Monomerzusammensetzung M2 gewährleistet ist. Dies erreicht man in der Regel dadurch, daß man die Monomerzusammensetzung M2 im Polymerisationsgefäß sehr viel schneller zugibt als sie durch Polymerisation abreagiert. Vorzugsweise erfolgt die Zugabe so rasch, daß bei beendeter Zugabe der Monomerzusammensetzung M2 nicht mehr als 20 % und insbesondere nicht mehr als 10 % der Monomerzusammensetzung M2 abreagiert sind. In der Regel wird die Dauer der Zugabe der Monomere M2 einen Zeitraum von 0,5 h nicht überschritten. Insbesondere gibt man die Monomerzusammensetzung M2 in einer Portion zu. Häufig wird man dabei so vorgehen, daß man zunächst die Monomerzusammensetzung M1 nach einem Zulaufverfahren polymerisiert, mit oder nach Beendigung der Zugabe der Monomere M1 die Zugabe des Polymerisationsinitiators unterbricht, die Monomere M2 zugibt und zu einem Zeitpunkt, wenn sich wenigstens 80 %, insbesondere wenigstens 90 % und besonders bevorzugt die Gesamtmenge der Monomere M2 im Polymerisationsgefäß sich befinden, gegebenenfalls die Initiatorzugabe wieder aufnimmt. Das Zeitintervall zwischen Beendigung der Zugabe der Monomere M1 und Beendigung der Initiatorzugabe vor Zugabe der Monomere M2 wird in der Regel eine Zeitdauer von einer Stunde nicht überschreiten und liegt z.B. im Bereich von 5 Minuten bis 30 Minuten. Das Zeitintervall zwischen Beendigung der Zugabe der Monomere M1 und Beginn der Zugabe der Monomere M2 beträgt in der Regel wenigstens 5 min und vorzugsweise wenigstens 10 min z.B. 10 min bis 1 h, vorzugsweise bis 0,5 h. In einer bevorzugten Ausführungsform wird die Initiatorzugabe wieder aufgenommen, nachdem die Zugabe der Monomere M2 beendet ist. Dieses Zeitintervall kann wenige Minuten bis mehrere Stunden betragen, z.B. 5 Minuten bis 60 Minuten. In einer anderen Ausführungsform der Erfindung werden die Monomere M2 durch den in Stufe 1 verwendeten Initiator polymerisiert. Hierzu geht man in der Regel so vor, dass man die Initiatorzugabe nicht vor Beendigung der Monomerzugabe von M1 beendet und gegebenenfalls über diesen Zeitpunkt hinaus fortsetzt. Die Beendigung der Initiatorzugabe kann dann z.B. mit Beginn oder mit Beendigung der Zugabe von M2 erfolgen. In der Regel wird es bei Verwendung von Initiatoren mit hinreichend langer Halbwertszeit unter Polymerisationsbedingungen, z.B. Peroxodisulfaten, ausreichen, die Initiatorzugabe nicht oder in den oben angegebenen Grenzen fortzusetzen. Grundsätzlich kann man die Temperatur nach Beendigung der Zugabe der Monomere M1, vorzugsweise jedoch nicht vor der ersten Beendigung der Initiatorzugabe absenken, um so die Polymerisation wirksam zu unterbrechen, und dann die Monomere M2 zugeben. Durch Anhebung der Temperatur während oder nach der Zugabe der Monomerzusammensetzung M2 wird dann die Polymerisation wieder gestartet. Vorzugsweise wird man jedoch die Polymerisationstemperatur nach Beendigung der Zugabe der Monomere M1 und über den Zeitraum der Zugabe der Monomere M2 beibehalten.

Die Zugabe der Monomerzusammensetzung M2 erfolgt vorzugsweise in unverdünnter Form, d.h. in Reinform bzw. in dem für eine Emulsionspolymerisation erforderlichen Reinheitsgrad und nicht in Form einer wässrigen Emulsion, um eine gute Quellung zu erreichen.

Bei Herstellung der Emulsionspolymerisate P in Gegenwart eines Reglers fügt man vorzugsweise die Hauptmenge des Reglers bereits bei der Herstellung des Emulsionspolymerisates P1 zu. In einer Ausführungsform wird die Gesamtmenge des Reglers bereits bei der Herstellung des Polymerisates P1 eingesetzt. In einer anderen Ausführungsform setzt man einen Teil, vorzugsweise 10 bis 50 % des Reglers bei der Polymerisation der Monomere M2 ein. Als radikalische Polymerisationsinitiatoren kommen grundsätzlich sowohl Peroxide, z.B. Wasserstoffperoxid, organische Peroxide wie tert.-Butylhydroperoxid, Alkalimetall- und Ammoniumperoxodisulfate als auch Azoverbindungen in Betracht. Bevorzugt werden Redoxinitiatorsysteme verwendet, die aus wenigstens einem organischen Reduktionsmittel und wenigstens einem Peroxid und/oder Hydroperoxid zusammengesetzt sind, z.B. tert.-Butylhydroperoxid und einer Schwefelverbindung, z.B. das Natriumsalz der Hydroxymethansulfinsäure. Natriumsulfit, Natriumdisulfit, Natriumthiosulfat oder Acetonbisulfit-Addukt, oder Wasserstoffperoxid mit Ascorbinsäure. Auch können für diesen Zweck Redoxinitiatorsysteme verwendet werden, die eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Acetonbisulfit-Addukt, Natriumsulfit, Natriumhydrogensulfit oder Natriumdisulfit und anstelle von Wasserstoffperoxid organische Peroxide, wie tert.-Butylhydroperoxid, Alkaliperoxodisulfate und/oder Ammoniumperoxodisulfat verwendet werden kann. Ebenfalls bevorzugte Initiatoren sind Peroxodisulfate, wie Natriumperoxodisulfat oder Ammoniumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,1 bis 5 Gew.-% und insbesondere 0,5 bis 4 Gew.-%, bezogen auf die zu polymerisierenden Monomere eingesetzt. Die oberflächenaktiven Substanzen verbleiben naturgemäß in den Polymerdispersionen und sind damit auch Bestandteil der erfindungsgemäßen Bodenbelagsklebstoffe.

Geeignete Schutzkolloide sind beispielsweise Polyvinylalkohole, Stärke- und Cellulosederivate sowie Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein.

Zu den anionischen Emulgatoren zählen Alkali- und Ammoniumsalze von Alkylsulfaten (Alkylrest: $C_8$-$C_{12}$), von Dialkylestern der Sulfobernsteinsäure (Alkylrest: $C_4$-$C_{10}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_{10}$), von Alkylsulfonsäuren (Alkylrest: $C_{12}$-$C_{18}$) und von Alkylarylsulfonsäuren (Alkylrest: $C_9$ bis $C_{18}$). Zu den anionischen grenzflächenaktiven Substanzen zählen auch Mono- und Dialkylderivate von Sulfonylphenoxybenzolsulfonsäure-Salzen, insbesondere deren Natrium-, Kalium- und Calciumsalze. Die Alkylgruppen in diesen Verbindungen weisen in der Regel 6 bis 18 und insbesondere 6, 12 oder 16 C-Atome auf. Häufig werden technische Gemische verwendet, die einen Anteil von 50 bis 90 Gew.-% des monoalkylierten Produktes aufweisen. Diese Verbindungen sind allgemein bekannt, z.B. aus der US-A-4,269,749, und im Handel erhältlich, beispielsweise als Dowfax® 2A1 (Warenzeichen der Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxylierungsgrad von 8 bis 50.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Bevorzugt umfassen die für die Herstellung der erfindungsgemäßen Polymerdispersionen verwendeten oberflächenaktiven Substanzen wenigstens einen anionischen Emulgator und gegebenenfalls einen oder mehrere nichtionische Emulgatoren. Für die Stabilität der erfindungsgemäßen Polymerdispersionen, insbesondere gegenüber mechanischen Belastungen wie Scherkräften, hat es sich als vorteilhaft erwiesen, wenn die zur Herstellung der erfindungsgemäßen Dispersionen bevorzugt eingesetzten anionischen Emulgatoren wenigstens ein Salz eines Dialkylesters der Sulfobernsteinsäure (linearer oder verzweigter $C_4$-$C_{10}$- und insbesondere $C_8$-Alkylrest), vorzugsweise ein Alkalimetallsalz und insbesondere das Natriumsalz umfassen.

Die Emulsionspolymerisation erfolgt in der Regel bei 30-130 °C, vorzugsweise 50-100°C.

Das Polymerisationsmedium kann sowohl nur aus Wasser, als auch aus Mischungen aus Wasser und damit mischbaren organischen Flüssigkeiten wie Methanol, Ethanol, n-Propanol, iso-Propanol, n-Butanol, tert.-Butanol, Tetrahydrofuran, Formamid oder Dimethylformamid bestehen, wobei der Anteil der organischen Flüssigkeiten, bezogen auf das Polymerisationsmedium üblicherweise weniger als 10 Gew.-% ausmacht. Hierbei ist zu berücksichtigen, dass die Gegenwart von Alkoholen bei der Polymerisation zu einer Verringerung des Molekulargewichts führen kann. Vorzugsweise wird nur Wasser als Polymerisationsmedium verwendet.

Neben der saatfreien Herstellungsweise kann zur Einstellung einer definierten Polymerteilchengröße die Emulsionspolymerisation nach dem Saatlatex-Verfahren oder in Gegenwart von in situ hergestelltem Saatlatex erfolgen. Verfahren hierzu sind bekannt und können dem Stand der Technik entnommen werden (siehe EP-B 40 419, EP-A-614 922, EP-A-567 812 und dort zitierte Literatur sowie 'Encyclopedia of Polymer Science and Technology', Vol. 5, John Wiley & Sons Inc., New York 1966, S. 847).

Bei dem Saatlatex-Verfahren wird die Polymerisation üblicherweise in Anwesenheit von 0,001 bis 3 Gew.-% und insbesondere 0,01 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 100 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch Monomere c) und/oder d), vorzugsweise weniger als 10 Gew.-%, bezogen auf das Gesamtgewicht der Polymerisatteilchen im Saatlatex, einpolymerisiert enthalten kann.

Zur Entfernung der Restmonomere wird üblicherweise im Anschluß an die Polymerisation eine Desodorierung auf physikalischem Wege, z.B. durch Abdestillieren der flüchtigen Monomere mit Wasserdampf, und/oder auf chemischem Wege durchgeführt. Bei der chemischen Desodorierung wird nach Ende der eigentlichen Emulsionspolymerisation, d.h. nach einem Umsatz der Monomeren von mindestens 95 %, oder nachdem der Restmonomergehalt durch physikalische Desodorierung auf einen Wert < 5 Gew.-% abgesenkt wurde, weiterer Initiator, z.B. ein Redoxinitiator zugesetzt.

Die auf diese Weise erhaltenen Emulsionspolymerisate liegen in Form wäßriger Dispersionen vor. Ihr Feststoffgehalt liegt in der Regel im Bereich von 30 bis 75 Gew.-% und vorzugsweise im Bereich von 40 bis 70 Gew.-%. Für die erfindungsgemäße Anwendung der Emulsionspolymerisate in Bodenbelagsklebern werden Dispersionen bevorzugt, deren Feststoffgehalt möglichst groß ist, d.h. wenigstens 50 Gew.-% beträgt.

Die Teilchendurchmesser der Polymerisatteilchen in den so erhältlichen Dispersionen liegt in der Regel im Bereich von 50 bis 1500 nm, insbesondere im Bereich von 50 bis 1000 nm (bestimmt mittels Ultrazentrifuge oder durch Photonenkorrelationsspektroskopie "Zur Teilchengrößenbestimmung" s. W. Mächtle, Angew. Makromolekulare Chemie 1984, Band 185, 1025-1039, W. Mächtle ebenda, 1988, Band 162, 35-42). Bei den bevorzugten hochkonzentrierten Dispersionen ist es aus Gründen der Viskosität von Vorteil, wenn der gewichtsmittlere Teilchendurchmesser der Polymerteilchen wenigstens 100 nm und vorzugsweise wenigstens 200 nm beträgt. Der mittlere Teilchendurchmesser wird in der Regel einen Wert von 1200 nm und vorzugsweise 800 nm nicht überschreiten. Ferner hat es sich als günstig erwiesen, wenn die Teilchendurchmesser der individuellen Polymerteilchen über einen großen Bereich variieren, insbesondere die Größenverteilung zwei oder mehrere Maxima aufweist (Polymerdispersionen mit bi- oder polymodaler Polymerteilchengrößenverteilung). Maßnahmen zur Einstellung der Polymerteilchengrößenverteilung sind dem Fachmann hinreichend bekannt (s. beispielsweise EP-A 614,922 und dort genannte Druckschriften).

Der Anteil des Emulsionspolymerisats P am Bodenbelagsklebstoff beträgt in der Regel 5 bis 50 Gew.-% und insbesondere 10 bis 30 Gew.-%, bezogen auf den Gesamtfeststoffgehalt des Bodenbelagsklebstoffes. Daneben enthält der Bodenbelagsklebstoff in der Regel wenigstens einen Füllstoff F in einer Menge von 40 bis 90 Gew.-% und insbesondere 50 bis 80 Gew.-%. Neben dem Emulsionspolymerisat P und dem Füllstoff F kann der erfindungsgemäße Bodenbelagsklebstoff auch einen Tackifier, d.h. ein klebrig machendes Harz H oder eine klebrig machende Harzzusammensetzung H in einer Menge von bis zu 40 Gew.-%, bezogen auf den Gesamtfeststoffgehalt, enthalten.

Eine Ausführungsform der Erfindung betrifft Bodenbelagsklebstoffe, die keinen Tackifier enthalten. Eine weitere Ausführungsform der Erfindung betrifft Bodenbelagsklebstoffe, die 1 bis 40 Gew.-% und bevorzugt 5 bis 30 Gew.-% Tackifier, bezogen auf die Gesamtmenge an Feststoffen in dem Bodenbelagsklebstoff, enthalten.

Typische anorganische Füllstoffe F für Bodenbelagsklebstoffe sind feingemahlene oder gefällte Kreiden, die vorzugsweise einen mittleren Teilchendurchmesser im Bereich von 2 bis 50 $\mu$m aufweisen, sowie Quarzmehl, das einen üblichen mittleren Teilchendurchmesser von 3 bis 50 $\mu$m aufweist.

Als Tackifier H sind grundsätzlich alle für diesen Zweck bekannten Harze H und Harzzusammensetzungen H geeignet. Bevorzugte Harze H sind Abietinsäure sowie modifizierte Abietinsäure, z.B. hydrierte oder disproportionierte Abietinsäure, Ester der Abietinsäure und ethoxylierte Abietinsäure sowie Mischungen davon, Abietinsäure oder Abietinsäure-Derivaten mit davon verschiedenen Harzen, insbesondere mit Phenolharzen. Vorzugsweise weisen die Harze bzw. Harzzubereitungen einen Schmelz- oder Erweichungspunkt im Bereich von 0 bis 90°C und insbesondere im Bereich von 40 bis 85°C auf. Harze auf Abietinsäure-Basis sind insbesondere als Kolophoniumharze oder Balsamharze bekannt. Die Harze H können als Tackifier in Reinform, als Harzmischungen oder in Form von Harzzubereitungen eingesetzt werden. Beispiele für geeignete Harzzubereitungen sind z.B. die in EP-A 490 191 beschriebenen Mischungen aus 50 bis 95 Gew.-% wenigstens eines klebrig machenden Harzes und 5 bis 50 Gew.-% einer alkoxylierten, vorzugsweise ethoxylierten Verbindung, die aus EP-A 962 510 bekannten Lösungen von Abietinsäure oder Abietinsäurederivaten in einem bei Raumtemperatur flüssigen Harz, vorzugsweise einem Kohlenwasserstoffharz mit einer Glasübergangstemperatur unter -10°C, die aus EP-A 832 165 bekannten Mischungen aus natürlicher und/oder modifizierter Abietinsäure mit Fettsäureestern sowie die aus EP 1 038 910 bekannten Lösungen von Kolophoniumharzen in Fettderivaten mit einer Molmasse von vorzugsweise 200 bis 400. Wegen weiterer Details dieser Harzzubereitungen wird auf die genannten Druckschriften verwiesen. Geeignete Tackifier sind auch Phenolharze, wie sie üblicherweise zu diesem Zweck verwendet werden.

Die Herstellung der erfindungsgemäßen Bodenbelagsklebstoffe kann in einfacher Weise z.B. dadurch erfolgen, daß die bei der Emulsionspolymerisation erhaltene wäßrige Polymerdispersion des Emulsionspolymerisats P oder ein daraus hergestelltes Pulver, oder ein aus dem Pulver hergestelltes wässriges Redispergat, der oder die Füllstoffe F, der oder die Tackifier H, gegebenenfalls Wasser und gegebenenfalls weitere Additive unter Rühren miteinander vermischt werden.

Die Komponenten P, F und H sind gut miteinander verarbeitbar, die erhaltenen wäßrigen Bodenbelagsklebstoffe sind stabil, insbesondere stabil bei Scherung und Lagerung.

Weiterhin enthalten die erfindungsgemäßen Bodenbelagsklebstoffe in der Regel die für Bodenbelagsklebstoffe üblichen Hilfsmittel und Zuschlagsstoffe wie Netz- oder Dispergiermittel, Verdicker, Entschäumer und/oder Konservierungsstoffe. Der Anteil dieser Hilfsmittel und Zuschlagsstoffe wird in der Regel einen Gewichtsanteil von 10 Gew.-%, bezogen auf den Gesamtfeststoffgehalt des Bodenbelagsklebstoffes nicht überschreiten und liegt in der Regel im Bereich von 0,5 bis 10 Gew.-% und insbesondere im Bereich von 0,5 bis 5 Gew.-%, bezogen auf den Gesamtfeststoffgehalt der Zusammensetzung. Der Anteil an Netz- oder Dispergiermittel liegt z.B. in einer Menge von 0,1 bis 5 Gew.-%. Verdicker werden üblicherweise in Mengen von 0 bis 10 Gew.-%, Konservierungsmittel in Mengen von 0 bis 1 Gew.-% und Entschäumer in Mengen von 0 bis 5 Gew-.% in den Bodenbelagsklebstoffen enthalten sein.

Der Bodenbelagsklebstoff ist in der Regel als wäßrige Zusammensetzung formuliert, deren Wassergehalt im allgemeinen bei 7 bis 50 Gew.-% und insbesondere bei 10 bis 30 Gew.-%, bezogen auf das Gesamtgewicht des Bodenbelagsklebstoffes liegt.

Die erfindungsgemäßen Bodenbelagsklebstoffe sind vorzugsweise im wesentlichen frei, insbesondere ganz frei ($\leq$ 0,01 Gew.-%) von organischen Lösungsmitteln und Weichmachern wie Butylacetat, Toluol oder Phthalsäureester. Sie enthalten, sofern überhaupt, organische Verbindungen mit einem Siedepunkt unterhalb 300°C bei Normaldruck (1 bar) in Mengen unter vorzugsweise 0,5 Gew.-% insbesondere unter 0,1 Gew.-%, besonders bevorzugt unter 0,05 Gew. % und ganz beson-ders bevorzugt unter 0,01 Gew.-%. Besonders bevorzugt erfüllt der erfindungsgemäße Bodenbelagsklebstoff Anforderungen der Emissionsfreiheit, wie sie von der Gemeinschaft Emissionskontrollierter Verlegewerkstoffe definiert werden.

Die Emissionen werden mit einer Kammerprüfmethode bestimmt. Der Fußbodenklebstoff bzw. die erfindungsgemäße Zusammensetzung wird mit 300 g/m² auf eine Glasplatte aufgetragen, deren Größe sich nach dem Kammervolumen richtet. Die Beladung der Kammer beträgt 0,4 m² der beschichteten Glasplatte pro m³ Kammervolumen. Die Emissionsbedingungen in der Edelstahlprüfkammer (Volumen mindestens 125 Liter) sind 23°C, 50 % rel. Luftfeuchte und ein stündlicher Luftwechsel der einen Austausch der gesamten Luft alle 2 Stunden bewirkt. Nach 10 Tagen werden die Langzeitemissionen bestimmt. Dazu wird ein definiertes Volumen des Luftstroms über Adsorbentien geleitet. Nach Desorption werden die emittierten Stoffe gaschromatographisch (GC-MS-Kopplung) oder flüssigkeitschromatographisch bestimmt. Die Langzeitemissionen werden in $\mu$g/m³ bestimmt, wobei Toluol als Standardsubstanz eingesetzt wird. Emittierte Substanzen, deren Kammerkonzentration größer als 20 $\mu$g/m³ ist, werden identifiziert und mit der identifizierten Reinsubstanz kalibriert. Emittierte Substanzen, deren Kammerkonzentration kleiner als 20 $\mu$g/m³ ist, werden nicht einzeln identifiziert. Die Kalibrierung erfolgt in diesen Fällen mit Toluol.
Die Werte aller Substanzen werden addiert. Im Falle der erfindungsgemäßen Bodenbelagsklebstoffe beträgt der Emissionswert für die Summe aller organischen Verbindungen maximal vorzugsweise 1500 $\mu$g/m³, und insbesondere maximal 500 $\mu$g/m³.

Die folgenden Beispiele sollen die Erfindung verdeutlichen, ohne sie jedoch einzuschränken.

Beispiele

I. Herstellung der Emulsionspolymerisate P

I.1 Herstellung durch einstufige Emulsionspolymerisation, allgemeine Herstellungsvorschrift:

In einem Polymerisationsreaktor wurden 236 g Wasser, 7,6 g Ascorbinsäure und 14 mg Eisen(II)sulfat vorgelegt. Die Vorlage wurde auf 90°C erwärmt. Anschließend gab man 10 % des wäßrigen Initiatorzulaufs zu und behielt die Temperatur 5 min bei. Dann gab man zeitgleich beginnend Zulauf 2 innerhalb 270 min mit konstanter Zulaufrate und Zulauf 1 mit der folgenden Zulaufrate zu: 1 % von Zulauf 1 innerhalb 10 min, danach 2 % von Zulauf 1 innerhalb 10 min, danach 3 % von Zulauf 1 innerhalb der folgenden 10 min, Restmenge von Zulauf 1 innerhalb 235 min. Nach Beendigung von Zulauf 2 behielt man die Temperatur weitere 15 min bei, kühlte dann auf 80°C ab und gab dann innerhalb von 120 min kontinuierlich mit gleichbleibender Zulaufrate 41,25 g einer 10 gew.-%igen, wässrigen t-Butylhydroperoxid-Lösung, 4,125 g Natriumdisulfit und 2,61 g Aceton zu. Man kühlte auf Raumtemperatur ab und stellte einen pH-Wert mittels wässriger NaOH auf 5,5 bis 6,5 ein und gab danach 13,75 g einer 45 gew.-%igen Lösung von Dodecylphenoxybenzoldisulfonsäure-Natriumsalz (Dowfax® 2A1 der Dow Chemical) zu.

Zulauf 1 enthielt 18,3 g einer 30 gew.-%igen, wäßrigen Lösung des Natriumsalzes des Schwefelsäurehalbesters eines ethoxylierten $C_{12}$-Fettalkohols (Ethoxylierungsgrad 30), 12,2 g der 45 gew.-%igen Dowfax 2A1-Lösung, 1,72 g tert.-Dodecylmercaptan, 1375 g Monomere und 22 g einer 25 gew.-%igen wäßrigen Natriumhydroxid-Lösung sowie 250 g Wasser. Die relativen Monomeranteile sind in Tabelle 1 angegeben.

Zulauf 2 sind 137,5 g einer 5 gew.-%igen Lösung von Natriumperoxodisulfat in Wasser.

Tabelle 1 Monomerzusammensetzung von Zulauf 1 (alle Angaben in Gew.-%)

| Beispiel | Monomere | | | | | | LD [%] |
|---|---|---|---|---|---|---|---|
| | BA | BMA | S | MMA | AN | AS | |
| 1 | 87,5 | 5,0 | 0 | 0 | 5,0 | 2,5 | 21 |
| 2 | 82,5 | 5,0 | 0 | 0 | 10,0 | 2,5 | 23 |
| V1 | 87,5 | 0 | 0 | 0 | 10,0 | 2,5 | 16 |
| V2 | 87,5 | 0 | 5,0 | 0 | 5,0 | 2,5 | 15 |

(fortgesetzt)

| Beispiel | Monomere | | | | | | LD [%] |
|---|---|---|---|---|---|---|---|
| | BA | BMA | S | MMA | AN | AS | |
| V3 | 87,5 | 0 | 0 | 5,0 | 5,0 | 2,5 | 16 |

BA = n-Butylacrylat
BMA = n-Butylmethacrylat
S = Styrol
MMA = Methylmethacrylat
AN = Acrylnitril
AS = Acrylsäure
$T_g$ = Glasübergangstemperatur (DSC, ASTM/D)
LD = Lichtdurchlässigkeit

I.2 Herstellung der Dispersionen nach Quellungsfahrweise, allgemeine Herstellungsvorschrift:

In einem Polymerisationsgefäß wurden 236 g Wasser, 7,6 g Ascorbinsäure und 14 mg Eisen(II)sulfat vorgelegt und auf 90°C erwärmt. Dann gab man unter Beibehaltung der Temperatur in einer Portion 10 % des Initiatorzulaufs (Zulauf 2a) zu, behielt die Temperatur weitere 5 min bei und startete dann, gleichzeitig beginnend, Zulauf 1a und Zulauf 2a. Zulauf 2a wurde mit kontinuierlicher Zulaufrate innerhalb von 195 min zugegeben. Die Zugabe von Zulauf 1a erfolgte stufenweise in der folgenden Weise: 1 % innerhalb 10 min, dann 2 % innerhalb der folgenden 10 min, dann 3 % innerhalb der sich anschließenden 10 min, Restmenge mit kontinuierlicher Zulaufrate innerhalb 150 min. Die Temperatur wurde nach Beendigung von Zulauf 2a weitere 15 min beibehalten. Dann gab man Zulauf 1b in einer Portion zu, rührte unter Beibehaltung der Temperatur 30 min und gab danach innerhalb 30 min Zulauf 2b mit kontinuierlicher Zulaufrate zu. Danach kühlte man auf 80°C ab und gab innerhalb von 120 min unter Beibehaltung der Temperatur 41,25 g einer 10 gew.-%igen, wässrigen Lösung von t-Butylhydroperoxid, 4,125 g Natriumdisulfit und 2,61 g Aceton zu. Man kühlte auf Raumtemperatur, stellte den pH-Wert mit Natronlauge auf pH 5,5 bis 6,5 ein und gab dann 13,8 g der 45 gew.-%igen Dowfax 2A1-Lösung zu.

Zulauf 1a enthielt 250 g Wasser, 18,3 g einer wässrigen Lösung des Natriumsalzes eines Schwefelsäurehalbesters eines ethoxylierten $C_{12}$-Fettalkohols (30 EO) (30 gew.-%ig), 12,2 g der 45 gew.-%igen Dowfax 2A1-Lösung, 1,72 g tert.-Dodecylmercaptan, 22 g einer 25 gew.-%igen, wäßrigen Natronlauge sowie 1306,2 g (bzw. 1304,9 g in Beispiel 4) Monomere der in Tabelle 2 angegebenen Zusammensetzung.

Zulauf 1b enthielt 68,5 g des in Tabelle 2 angegebenen Monomers bzw. 70,1 g der in Tabelle 2 angegebenen Monomerzusammensetzung.

Zulauf 2a sind 137,5 g einer 5 gew.-%igen, wäßrigen Natriumperoxodisulfat-Lösung.

Zulauf 2b sind 27,5 g einer 5 gew.-%igen, wäßrigen Natriumperoxodisulfat-Lösung.

Tabelle 2 Monomerzusammensetzungen Zulauf 1a und Zulauf 1b (alle Angaben in Gew.-%)

| Beispiel | Monomere Zulauf 1a | | | Monomere Zulauf 1b | | | | | LD [%] |
|---|---|---|---|---|---|---|---|---|---|
| | BA | AN | AS | BMA | S | BA | BDDA | t-DMK* | |
| 3 | 83,1 | 9,5 | 2,4 | 5,0 | 0 | 0 | 0 | 0 | 23 |
| 4 | 83,0 | 9,5 | 2,4 | 5,0 | 0 | 0 | 0,1 | 0 | 30 |
| V4 | 83,1 | 9,5 | 2,4 | 0 | 5 | 0 | 0 | 0 | 14 |
| V5 | 78,1 | 9,5 | 2,4 | 0 | 0 | 10 | 0 | 0,05 | 17 |

* tert.-Dodecylmercaptan in Gew.-%, bezogen auf Monomere (= pphm)
BDDA = Butandioldiacrylat
LD = Lichtdurchlässigkeit

II. Herstellung der erfindungsgemäßen Bodenbelagsklebstoffe

Die Polymerdispersionen der Beispiele 1 bis 4 und der Vergleichsbeispiele V1 bis V5 wurden mit den im Folgenden angegebenen Füllstoffen, Tackifiern und weiteren Additiven gemischt. Die Menge der Dispersion wurde dabei so gewählt, dass der Gehalt an Polymer P in allen Formulierungen gleich war.

| Allgemeine Rezeptur I: | |
| --- | --- |
| Dispersion | 30,3 |
| Harzschmelze | 14,7 |
| Disponil FES 77 | 0,5 |
| Latekoll D Lsg. 2 %ig | 3,2 |
| AgitanVP 282 | 0,2 |
| Lumiten NOG | 0,5 |
| Pigmentverteiler NL | 0,5 |
| Lumiten I DS3525 | 0,2 |
| Burez LE 3004 | 4,2 |
| Ulmer Weiss XM | 45,7 |
| Mengenangaben in Gew.-Teilen | |

| | |
| --- | --- |
| Dispersion: | Wässrige Dispersion des in I hergestellten Emulsionspolymerisats in einer Menge von 62 bis 63 Gew.-Teilen Polymer |
| Harzschmelze: | Balsamharz WW/Novarez XCO: Abmischung eines Balsamharzes (Balsamharz WW der Fa. Hermann) und eines Phenolharzes (Novarez XCO der Fa. Rütgers VFT AG, Duisburg) im Gewichtsverhältnis 1:1 |
| Disponil FES 77: | Dispergierhilfsmittel (Henkel) |
| Latekoll: | Wässrige 2 gew.-%ige Lösung eines Verdicker (BASF) |
| Agitan: | Entschäumer (Firma Münzing) |
| Lumiten NOG | Dispergierhilfsmittel (BASF) |
| Pigmentverteiler NL: | Dispergierhilfsmittel (BASF) |
| Lumiten I DS3525: | Dispergierhilfsmittel (BASF) |
| Ulmer Weiss XM: | Füllstoff (Ulmo-Füllstoff-Vertrieb) |

II. Anwendungstechnische Prüfung

- Naßanzugsvermögen (NAV)

Der Klebstoff wird mit einem DIN-Rakel auf eine Zementfaserplatte (z.B. Eternit® 2000) (20 x 50 cm) in Abzugsrichtung ausgetragen. Auftragsmenge ca. 350 - 400 g/m². Nadelfilzbeläge (NBB Streifen) werden nach 10 Minuten Ablüften in das Kleberbett eingelegt und mit einer 2,5 kg Walze durch 3 mal Hin- und Herrollen angepreßt. In den angegebenen Zeitabständen werden die Beläge mit einem Abzugsgerät abgezogen und dabei die Zunahme des Abschälwiderstandes in N/5 cm bestimmt.

- Trockenanfaßvermögen (TAV)

Der Klebstoff wird mit DIN-Rakel auf eine Zementfaserplatte (z.B. Eternit® 2000) (20 x 50 cm) in Abzugsrichtung aufgetragen. Auftragsmenge ca. 250 - 300 mg/m². PVC Streifen (Pegulan® B 1) werden nach unterschiedlicher Ablüftzeit in das Kleberbett eingelegt und mit einer 2,5 kg Walze durch Hin und Herrollen (3x) angepreßt. Anschließend werden die Streifen mit einem Abzugsgerät abgezogen und der Abschälwiderstand in N/5 cm bestimmt.

- Schälfestigkeit

Die Schälfestigkeit wurde bestimmt nach DIN 16860. Bei der Schälfestigkeit werden unterschiedliche Beläge geprüft:

NBB: Nadelvlies-Bodenbelag
Elastomer: Gummi-Belag
PO: Polyolefinbelag
PVC: PVC-Belag

Die Ergebnisse sind in Tabelle 2 aufgeführt.

**10**

Tabelle 2: Ergebnisse

| Dispersion | | 1 | 2 | V1 | V2 | 3 | 4 | V3 | V4 | V5 |
|---|---|---|---|---|---|---|---|---|---|---|
| NAV N/5cm | 10 min | 20 | 34 | 10 | 16 | 23 | 20 | 13 | 20 | 22 |
| | 15 min | 30 | 42 | 15 | 20 | 26 | 27 | 16 | 25 | 26 |
| | 20 min | 38 | 50 | 18 | 32 | 40 | 43 | 26 | 35 | 45 |
| | 30 min | 53 | 70 | 35 | 55 | 67 | 67 | 43 | 61 | 60 |
| TAV N/5cm | 10 min | 2 | 13 | 2 | 1 | 15 | 2 | 1 | 2 | 3 |
| | 20 min | 21 | 35 | 23 | 20 | 44 | 15 | 27 | 11 | 27 |
| | 30 min | 23 | 50 | 25 | 23 | 43 | 18 | 23 | 32 | 20 |
| | 45 min | 25 | 57 | 15 | 14 | 40 | 10 | 18 | 20 | 16 |
| Schälfestigkeit NBB (N/mm) 10 min Ablüftzeit | | 1,76 | 2,98 | 2,41 | 1,57 | 2,63 | 2,28 | 1,27 | 2,54 | 1,75 |
| Schälfestigkeit PVC (N/mm) 10 min Ablüftzeit | | 2,13 | 2,89 | n.b. | n.b. | 2,54 | 1,64 | n.b. | 2,93 | 2,7 |
| Schälfestigkeit PO (N/mm) 10 min Ablüftzeit | | 2,23 | 2,69 | n.b. | n.b. | 2,78 | 0,48 | n.b. | 1,87 | 1,98 |
| Schälfestigkeit Elastomer (N/mm) 10 min Ablüftzeit | | 2,82 | 3,14 | n.b. | n.b. | 3,30 | 2,44 | n.b. | 2,91 | 2,66 |

**Patentansprüche**

1.  Bodenbelagsklebstoff auf Basis eines Emulsionspolymerisates P, das

    a) 65 bis 95 Gew.-% wenigstens eines Monomers a), ausgewählt unter $C_2$-$C_8$-Alkylacrylaten,
    b) 2 bis 15 Gew.-% wenigstens eines Monomers b), ausgewählt unter $C_2$-$C_6$-Alkylmethacrylaten,
    c) 0,5 bis 5 Gew.-% wenigstens eines monoethylenisch ungesättigten Monomers c), das wenigstens eine Säuregruppe aufweist,
    d) 0 bis 19,5 Gew.-% wenigstens eines monoethylenisch ungesättigten neutralen Monomers d) mit einer Wasserlöslichkeit >50 g/l (bei 25°C) und gegebenenfalls
    e) bis zu 20 Gew.-% von den Monomeren a), b), c) und d) verschiedene Monomere e)

    einpolymerisiert enthält, wobei sich die Gewichtsanteile der Monomere a), b), c), d) und gegebenenfalls e) auf 100 Gew.-% addieren.

2.  Bodenbelagsklebstoff nach Anspruch 1, worin das Emulsionspolymerisat P eine Glasübergangstemperatur $T_g$ im Bereich von -10 bis -60°C aufweist.

3.  Bodenbelagsklebstoff nach einem der vorhergehenden Ansprüche, worin das Monomer b) n-Butylmethacrylat ist.

4.  Bodenbelagsklebstoff nach einem der vorhergehenden Ansprüche, worin das Monomer d) Acrylnitril ist.

5.  Bodenbelagsklebstoff nach einem der vorhergehenden Ansprüche, wobei das Monomer a) ausgewählt ist unter n-Butylacrylat sowie Mischungen aus n-Butylacrylat und 2-Ethylhexylacrylat.

6.  Bodenbelagsklebstoff nach einem der vorhergehenden Ansprüche, worin das Emulsionspolymerisat P als Monomere e) 0,01 bis 0,3 Gew.-% di- oder polyethylenisch ungesättigte Monomere einpolymerisiert enthält.

7.  Bodenbelagsklebstoff nach einem der vorhergehenden Ansprüche, wobei das Emulsionspolymerisat P durch wäßrige Emulsionspolymerisation der Monomere a), b),c), d) und gegebenenfalls e) in Gegenwart von 0,01 bis 0,5 Gew.-%, bezogen auf die Gesamtmenge der Monomere, wenigstens eines Polymerisationsreglers erhältlich ist.

8. Bodenbelagsklebstoff nach einem der vorhergehenden Ansprüche, wobei das Emulsionspolymerisat P erhältlich ist durch eine radikalische wäßrige Emulsionspolymerisation einer Monomerzusammensetzung, welche die Monomere a) bis d) und gegebenenfalls e) enthält.

9. Bodenbelagsklebstoff nach einem der Ansprüche 1 bis 6, wobei das Emulsionspolymerisat P erhältlich ist durch radikalisch wäßrige Emulsionspolymerisation, bei der man

i) zunächst eine Monomerzusammensetzung M1 polymerisiert, welche Monomere a), c), d) gegebenenfalls bis zu 70 % der Gesamtmenge der Monomere b) und gegebenenfalls einen Teil oder die Gesamtmenge der Monomere e) enthält und die wenigstens 85 Gew.-% der Gesamtmonomermenge ausmacht, wobei man eine wäßrige Dispersion eines ersten Emulsionspolymerisates P1 erhält;

ii) zu der wäßrigen Dispersion des Emulsionspolymerisates P1 eine zweite Monomerzusammensetzung M2 gibt, welche wenigstens 30 % des Monomers b) und gegebenenfalls die Restmengen der Monomere a), c), d) und gegebenenfalls e) enthält, wobei die Zugabe in einer Weise erfolgt, die eine Quellung des Polymer P1 durch die Monomerzusammensetzung M2 bewirkt und

iii) die in ii) erhaltene Dispersion des gequollenen Polymeren P1 polymerisiert, wobei man das Emulsionspolymerisat P erhält.

10. Bodenbelagsklebstoff nach einem der vorhergehenden Ansprüche, welcher

- 5 bis 50 Gew.-% wenigstens eines Emulsionspolymerisates P, gerechnet als Polymer,
- 30 bis 95 Gew.-% wenigstens eines anorganischen Füllstoffs F und
- bis zu 40 Gew.-% eines klebrig machenden Harzes oder einer klebrig machenden Harz-Zusammensetzung H enthält,

wobei die Summe der Gewichtsanteile der Komponenten P, F und H insgesamt 100 Gew.-% ergibt.

11. Bodenbelagsklebstoff nach Anspruch 10, enthaltend wenigstens ein klebrig machendes Harz H, das ausgewählt ist unter Abietinsäure, modifizierter Abietinsäure und Phenolharzen.

12. Verwendung eines Bodenbelagsklebstoffes nach einem der vorhergehenden Ansprüche zur Verklebung flexibler Bodenbeläge.

**Claims**

1. A floorcovering adhesive based on an emulsion polymer P which comprises, incorporated into a polymer,

a) from 65 to 95% by weight of at least one monomer a), selected from $C_2$-$C_8$-alkyl acrylates,
b) from 2 to 15% by weight of at least one monomer b), selected from $C_2$-$C_6$-alkyl methacrylates,
c) from 0.5 to 5% by weight of at least one monoethylenically unsaturated monomer c) which has at least one acid group,
d) from 0 to 19.5% by weight of at least one monoethylenically unsaturated neutral monomer d) with water-solubility >50 g/l (at 25°C), and, if appropriate,
e) up to 20% by weight of monomers e) other than the monomers a), b), c) and d),

where the proportions by weight of the monomers a), b), c), d), and, if appropriate e) give 100% by weight in total.

2. The floorcovering adhesive according to claim 1, in which the emulsion polymer P has a glass transition temperature Tg in the range from -10 to -60°C.

3. The floorcovering adhesive according to any of the preceding claims, in which the monomer b) is n-butyl methacrylate.

4. The floorcovering adhesive according to any of the preceding claims, in which the monomer d) is acrylonitrile.

5. The floorcovering adhesive according to any of the preceding claims, where the monomer a) has been selected from n-butyl acrylate and mixtures of n-butyl acrylate and 2-ethylhexyl acrylate.

6. The floorcovering adhesive according to any of the preceding claims, in which the emulsion polymer P comprises, as monomer e) incorporated into the polymer, from 0.01 to 0.3% by weight of di- or polyethylenically unsaturated monomers.

7. The floorcovering adhesive according to any of the preceding claims, where the emulsion polymer P is obtainable by aqueous emulsion polymerization of the monomers a), b), c), d), and, if appropriate, e) in the presence of from 0.01 to 0.5% by weight, based on the total amount of the monomers, of at least one polymerization regulator.

8. The floorcovering adhesive according to any of the preceding claims, where the emulsion polymer P is obtainable by free-radical aqueous emulsion polymerization of a monomer composition which comprises the monomers a) to d), and, if appropriate, e).

9. The floorcovering adhesive according to any of claims 1 to 6, where the emulsion polymer P is obtainable by free-radical aqueous emulsion polymerization in which

i) a monomer composition M1 is first polymerized, which comprises monomers a), c), d), if appropriate up to 70% of the entire amount of the monomers b), and, if appropriate, some or all of the monomers e), and which makes up at least 85% by weight of the total amount of monomer, giving an aqueous dispersion of a first emulsion polymer P1;
ii) a second monomer composition M2, which comprises at least 30% of the monomer b) and, if appropriate, the remaining amounts of the monomers a), c), d) and, if appropriate, e), is added to the aqueous dispersion of the emulsion polymer P1, the manner of addition being such that the monomer composition M2 swells the polymer P1, and
iii) the dispersion of the swollen polymer P1 obtained in ii) is polymerized, giving the emulsion polymer P.

10. The floorcovering adhesive according to any of the preceding claims, which comprises

- from 5 to 50% by weight of at least one emulsion polymer P, calculated using a polymer,
- from 30 to 95% by weight of at least one inorganic filler F, and
- up to 40% by weight of a tackifying resin or of a tackifying resin composition H,

where the total of the proportions by weight of components P, F, and H is 100% by weight.

11. The floorcovering adhesive according to claim 10, comprising at least one tackifying resin H selected from abietic acid, modified abietic acid, and phenolic resins.

12. The use of a floorcovering adhesive according to any of the preceding claims for the adhesive bonding of flexible floorcoverings.

**Revendications**

1. Adhésif pour revêtement de sol à base d'un polymère obtenu en émulsion P, qui contient sous forme polymérisée :

a) 65 à 95 % en poids d'au moins un monomère a), choisi parmi des acrylates d'alkyle en $C_2$-$C_8$,
b) 2 à 15 % en poids d'au moins un monomère b), choisi parmi des méthacrylates d'alkyle en $C_2$-$C_6$,
c) 0,5 à 5 % en poids d'au moins un monomère à insaturation monoéthylénique c), qui présente au moins un groupement acide,
d) 0 à 19,5 % en poids d'au moins un monomère neutre à insaturation monoéthylénique d), présentant une solubilité dans l'eau supérieure à 50 g/l (à 25 °C) et, éventuellement,
e) jusqu'à 20 % en poids de monomères e) différents des monomères a), b), c) et d),

la somme des fractions en poids des monomères a), b), c), d) et, éventuellement, e) atteignant 100 % en poids.

2. Adhésif pour revêtement de sol selon la revendication 1, dans lequel le polymère obtenu en émulsion P présente une température de transition vitreuse Tg dans la plage de -10 à -60 °C.

3. Adhésif pour revêtement de sol selon l'une quelconque des revendications précédentes, dans lequel le monomère b) est le méthacrylate de n-butyle.

4. Adhésif pour revêtement de sol selon l'une quelconque des revendications précédentes, dans lequel le monomère d) est l'acrylonitrile.

5. Adhésif pour revêtement de sol selon l'une quelconque des revendications précédentes, dans lequel le monomère a) est choisi parmi l'acrylate de n-butyle, ainsi que des mélanges d'acrylate de n-butyle et d'acrylate de 2-éthyl-hexyle.

6. Adhésif pour revêtement de sol selon l'une quelconque des revendications précédentes, dans lequel le polymère obtenu en émulsion P contient comme monomères e), sous forme polymérisée, 0,01 à 0,3 % en poids de monomères à insaturation diéthylénique ou polyéthylénique.

7. Adhésif pour revêtement de sol selon l'une quelconque des revendications précédentes, dans lequel on peut obtenir le polymère obtenu en émulsion P par polymérisation en émulsion aqueuse des monomères a), b),c), d) et, éventuellement, e), en présence de 0,01 à 0,5 % en poids d'au moins un régulateur de polymérisation, par rapport à la quantité totale des monomères.

8. Adhésif pour revêtement de sol selon l'une quelconque des revendications précédentes, dans lequel on peut obtenir le polymère en émulsion P par polymérisation radicalaire en émulsion aqueuse d'une composition de monomères qui contient les monomères a) à d) et, éventuellement, e).

9. Adhésif pour revêtement de sol selon l'une quelconque des revendications 1 à 6, dans lequel on peut obtenir le polymère obtenu en émulsion P par polymérisation radicalaire en émulsion aqueuse, dans laquelle :

i) on polymérise d'abord une composition de monomères M1, qui contient les monomères a), c), d), éventuellement jusqu'à 70 % de la quantité totale des monomères b) et, éventuellement, une partie ou la quantité totale des monomères e), et qui constitue au moins 85 % en poids de la quantité totale en monomères, sous obtention d'une dispersion aqueuse d'un premier polymère en émulsion P1 ;
ii) on ajoute à la dispersion aqueuse du polymère obtenu en émulsion P1 une seconde composition de monomères M2, qui contient au moins 30 % du monomère b) et, éventuellement, les quantités restantes des monomères a), c), d) et, éventuellement, e), l'addition se faisant de manière à provoquer un gonflement du polymère P1 par la composition de monomères M2, et
iii) on polymérise la dispersion du polymère gonflé P1, obtenue à l'étape ii), en obtenant le polymère en émulsion P.

10. Adhésif pour revêtement de sol selon l'une quelconque des revendications précédentes, qui contient :

- 5 à 50 % en poids d'au moins un polymère obtenu en émulsion P, calculé comme polymère,
- 30 à 95 % en poids d'au moins une charge inorganique F, et
- jusqu'à 40 % en poids d'une résine ou d'une composition résineuse H à pouvoir adhésif,

la somme des fractions en poids des composants P, F et H atteignant, au total, 100 % en poids.

11. Adhésif pour revêtement de sol selon la revendication 10, contenant au moins une résine H à pouvoir adhésif, qui est choisie parmi l'acide abiétique, l'acide abiétique modifié et les résines phénoliques.

12. Utilisation d'un adhésif pour revêtement de sol selon l'une quelconque des revendications précédentes, dans le but de coller des revêtements de sol flexibles.

EP 1 323 879 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 490191 A
- EP 962510 A
- WO 9937716 A
- WO 9810001 A
- US 4269749 A
- EP 40419 B
- EP 614922 A
- EP 567812 A
- EP 832165 A
- EP 1038910 A

**In der Beschreibung aufgeführte Nicht-Patentliteratur**

- **D. URBAN et al.** Wäßrige Polymerdispersionen. Wiley-VCH, 1999, 150-154
- Ullmann's Encyclopedia of Industrial Chemistry. VCH, 1992, vol. A 21, 169
- **J. BRANDRUP.** E.H. Immergut, Polymer Handbook. J. Wiley, 1989
- Houben-Weyl, Methoden der organischen Chemie. Georg-Thieme-Verlag, 1961, vol. XIV/1, 411-420
- *Houben-Weyl, Methoden der organischen Chemie,* 1961, vol. XIV/1, 192-208
- *Encyclopedia of Polymer Science and Technology,* 1966, vol. 5, 847
- **W. MÄCHTLE.** Zur Teilchengrößenbestimmung. *Angew. Makromolekulare Chemie,* 1984, vol. 185, 1025-1039
- **W. MÄCHTLE.** *ebenda,* 1988, vol. 162, 35-42